# EUROPEAN PATENT SPECIFICATION

(11) **EP 2 932 518 B1**
(45) Date of publication and mention of the grant of the patent: **27.07.2016**
(21) Application number: 14706705.2
(22) Date of filing: 20.01.2014
(51) Int. Cl.: H01G 11/32, H01G 11/62

(54) **HIGH ENERGY ELECTROCHEMICAL CAPACITOR WITH AQUEOUS ELECTROLYTE CONTAINING IODIDE**
HOCHENERGETISCHER ELEKTROCHEMISCHER KONDENSATOR MIT WÄSSERIGEN ELEKTROLYT MIT IODID
CONDENSATEUR AYANT UNE GRANDE ÉNERGIE ÉLECTROCHIMIQUES AVEC UN ÉLECTROLYTE AQUEUX CONTENANT UN IODURE

(43) Date of publication of application: 21.10.2015
(73) Proprietor: Politechnika Poznanska, 60-965 Poznan (PL)
(72) Inventor: BÉGUIN, François, 45160 Olivet (FR); FRACKOWIAK, Elzbieta, 61-695 Poznan (PL); ABBAS, Qamar, 61-847 Poznan (PL)
(74) Representative: BRANDPAT Patent and Trademark Attorneys Chlebicka Czyz Galazkiewicz Ziolkowski Professional Partnership
(86) International application number: PCT/PL2014/050002
(87) International publication number: WO 2015/108428

(56) References cited:
- US-A- 4 713 731
- S. T. SENTHILKUMAR ET AL: "Electric double layer capacitor and its improved specific capacitance using redox additive electrolyte", JOURNAL OF MATERIALS CHEMISTRY A, vol. 1, no. 4, 1 January 2013 (2013-01-01) , page 1086, XP055140093, ISSN: 2050-7488, DOI: 10.1039/c2ta00210h
- LOTA G ET AL: "Striking capacitance of carbon/iodide interface", ELECTROCHEMISTRY COMMUNICATIONS, ELSEVIER, AMSTERDAM, NL, vol. 11, no. 1, 1 January 2009 (2009-01-01), pages 87-90, XP025839007, ISSN: 1388-2481, DOI: 10.1016/J.ELECOM.2008.10.026 [retrieved on 2008-11-01]
- HAIJUN YU ET AL: "Improvement of the performance for quasi-solid-state supercapacitor by using PVAKOHKI polymer gel electrolyte", ELECTROCHIMICA ACTA, ELSEVIER SCIENCE PUBLISHERS, BARKING, GB, vol. 56, no. 20, 13 June 2011 (2011-06-13) , pages 6881-6886, XP028257053, ISSN: 0013-4686, DOI: 10.1016/J.ELECTACTA.2011.06.039 [retrieved on 2011-06-21]

## Description

High-energy electrochemical capacitor in mixed salt aqueous electrolyte containing iodide The invention refers to a high-energy electrochemical capacitor in mixed salt aqueous electrolyte containing iodide.

### Technical field

Electrochemical capacitors, also known as supercapacitors, are characterized by their excellent cyclability and fast charge/discharge, giving high power in short periods of time, making them in particular an interesting choice for powering hybrid and electric vehicles. However, in general, they display lower energy density as compared to other commercially available energy storage devices, e.g. accumulators. Taking into account the equation E = ½ CU², the energy E stored in a capacitor highly depends on capacitance C and voltage U, the latter being controlled by the stability window of the electrolyte.

Commercially available electrochemical capacitors based on two activated carbon (AC) electrodes generally operate in organic electrolytes, e.g. TEABF₄ in acetonitrile or propylene carbonate, and exhibit a high stability window, up to 2.7-2.8 V. However, due to the relatively high cost, environmentally unfriendly character and lower conductance (mainly due to lower dissociation) of organic electrolytes, alternative solutions, such as aqueous electrolytes, are highly desirable. Conventional aqueous electrolytes usually used in electrochemical power sources, like acids (H₂SO₄) and alkalis (KOH), display higher conductivity (up to ∼1 S·cm⁻¹) and higher capacitance C values than organic electrolytes. However, their restricted stability window, about 0.7-0.8 V, and highly corrosive nature are a hindrance for their industrial viability.

### Background art

EP2323146 discloses a water-based electrolyte for an electric double-layer capacitor comprising: a salt having a cation and an anion, wherein the cation is Li⁺, Na⁺, or K⁺, and the anion is Cl⁻, SO₄²⁻, PO₄³⁻ or NO₃⁻; and a second component having a cation and an anion, wherein the cation is Li⁺, Na⁺, or K⁺, and the anion is OH⁻.

Document US4713731A discloses a double layer capacitor which comprises two electrodes made of high surface area carbon placed in a mixed salt aqueous electrolyte. To avoid the decomposition of the electrolyte halide including iodide is added to the sulphuric acid based electrolyte.

The international publication WO2012126499 presents a supercapacitor with aqueous electrolyte comprising i.a. Li₂SO₄, Na₂SO₄, K₂SO₄, Cs₂SO₄, LiNO₃, NaNO₃ and KNO₃. In this document, as well as in M. Bichat, E. Raymundo-Piñero, F. Béguin, "High voltage supercapacitor built with seaweed carbons in neutral aqueous electrolyte", Carbon 48 (2010) 4351-4361 and L. Demarconnay, E. Raymundo-Piñero, F. Béguin, "A symmetric carbon/carbon supercapacitor operating at 1.6 V by using a neutral aqueous solution", Electrochem. Comm., 12 (2010) 1275-1278, it has been demonstrated that AC/AC capacitors based on salt aqueous electrolytes exhibit excellent cyclability under galvanostatic charge/discharge up to 1.6 V.

In the publications Q. Gao, L. Demarconnay, E. Raymundo-Piñero, F. Béguin, "Exploring the large voltage range of carbon/carbon supercapacitors in aqueous lithium sulfate electrolyte", Energy Environ. Sci., 5 (2012) 9611-9617, K. Fic, G. Lota, M. Meller, E. Frackowiak, "Novel insight into neutral medium as electrolyte for high-voltage supercapacitors", Energy & Environ. Sci., 5 (2012) 5842-5850, as well as in Polish patent PL215699 (Application No. P.392742), it has been disclosed that even higher values, up to around 2 V, can be reached with AC/AC capacitors using aqueous Li₂SO₄. In all cases, such high voltage values are achievable owing to the high over-potential for di-hydrogen evolution at the negative electrode. It has to be mentioned that the research work carried out so far in activated carbon-based capacitors utilized gold current collectors in order to get rid of possible corrosive effects related with the use of the aqueous electrolytes. Although Li₂SO₄ seems to be the electrolyte of choice for future AC/AC capacitor applications, due to its environment friendly character, large stability window and high solubility (up to 2.7 mol·L⁻¹), further optimization of salt aqueous electrolytes seems essential in order to realize economically viable electrochemical capacitors with enhanced performance.

As the need to provide a cheap and efficient capacitor delivering high power and energy still exists, the object of the invention is to provide a low-cost, low-toxicity and high safety capacitor with a long-cycle life, having energy and power density comparable to organic electrolyte systems.

### Disclosure of the invention

The invention provides an electrochemical capacitor polarized up to 1.6 V comprising two electrodes made of high surface area carbon, placed in aqueous electrolyte, wherein one of the components of the mixed aqueous electrolyte is an iodide (I⁻) containing salt in the concentration between 0.1 mol·L⁻¹ and 2 mol·L⁻¹ and another component is a sulphate (SO₄²⁻) anion salt with a cation selected among Li⁺, Na⁺, K⁺, Rb⁺, Cs⁺, NH₄⁺, Be²⁺, Mg²⁺, Ba²⁺, and Al³⁺ or a nitrate (NO₃⁻) anion salt with a cation selected among Li⁺, Na⁺, K⁺, Rb⁺, Cs⁺, NH₄⁺, Be²⁺, Mg²⁺, Ca²⁺, Sr²⁺, Ba²⁺, and Al³⁺, in the concentration from 0.1 mol·L⁻¹ up to 10 mol·L⁻¹ orup to 0.2 mol·L⁻¹ below the solubility limit.

The high surface area carbon material of electrodes is preferably selected from activated carbon (AC), nanotubes, graphene, nanocones, carbon onions, carbon aerogels, or composites made from these materials, carbon cloth, carbon monolith, the most preferably activated carbon (AC).

Moreover, it is advisable that each electrode comprises a current collector, preferably from stainless steel or titanium or nickel and its alloys.

The electrochemical capacitor according to the invention in one of its preferred embodiments uses the aqueous electrolyte comprising potassium iodide (KI) and lithium sulfate (Li₂SO₄), preferably in the concentrations of 0.5 mol·L⁻¹ KI and 1 mol·L⁻¹ Li₂SO₄. Alternatively, in another preferred embodiment the capacitor of the invention has the aqueous electrolyte comprising potassium iodide (KI) and sodium nitrate (NaNO₃), preferably in the concentrations of 0.5 mol·L⁻¹ KI and 1 mol·L⁻¹ NaNO₃.

The capacitor of the invention exhibits a capacitance exceeding 250 F·g⁻¹ polarized up to 1.6 V with cycle stability over 10 000 cycles. The capacitor preferably exhibits a capacitance over 350 F·g⁻¹. All values referring to mass, expressed as g⁻¹ or kg⁻¹ in the whole text mean per average mass of carbon material in one electrode.

The capacitor exhibits energy density over 25 Wh·kg⁻¹, preferably over 30 Wh·kg⁻¹ of carbon material.

The further subject of the invention is the capacitor defined above connected to at least one accumulator or fuel cell or engine or an electric circuit or the grid.

The subject of the invention is also the use of the water based electrochemical capacitor defined above to accumulate electrical energy with a density over 30 Wh·kg⁻¹ of carbon material.

The capacitor of the invention can be used for energy storage and delivery in cars, buses, rail vehicles, emergency doors and evacuation slides in airplanes, UPS, transformer stations, cranes, elevators, wind farms and solar farms, etc.

The invention is based on the observation that the pseudocapacitance originating from Faradaic redox reactions at the electrode/electrolyte interface in AC-based capacitors greatly improves the capacitance. For example, in *Electrochem. Common.* 11 (2009) 87 and Polish Patent PL215046 (Application No. P.386352) it has been demonstrated that AC-based capacitors containing 1 mol·L⁻¹ potassium iodide (KI) exhibit higher capacitance values than with other salt electrolytes when operating up to 0.8 V.

No AC-based capacitor containing potassium iodide (KI) has been reported so far to be polarizable beyond 1 V. In this patent application, we propose to combine the advantages of sulfate or nitrate-based salts to enhance the voltage (owing to over-potential for di-hydrogen evolution) and iodide-based salts to enhance the capacitance (owing to pseudocapacitance originating from redox reactions at the carbon/iodine interface), in order to get energy density values of AC/AC capacitors in the same range as industrial AC/AC capacitors in an organic electrolyte using the same type of carbon material for electrodes. Although in S. Senthilkumar, R. Selvan, Y. Lee, J. Melo, J. Mater. Chem. A1 (2013) 1086-1095 a mixed electrolyte combining Na₂SO₄ (1 mol·L⁻¹) and KI (0.08 mol·L⁻¹) has been disclosed, the system was never applied for polarization over 1 V to give high energy density values.

In our invention, mixed electrolytes which utilize the enlarged stability window of salt aqueous electrolytes based on sulfate or nitrate salts, and enhanced capacitance originating due to the 2I⁻/I₂ redox couple, have been used to develop AC/AC symmetric capacitors capable of operating up to 1.6 V with optional current collectors made up of stainless steel or titanium or nickel and its alloys. Additionally, among the salts, both Li₂SO₄ and NaNO₃ are capable of giving highly concentrated aqueous solutions of up to 2.7 mol·L⁻¹ and 10 mol·L⁻¹, respectively, which are very favorable for low-temperature range. Moreover, as mentioned before, these electrolytes allow attaining energy density comparable to the one achieved in organic medium with the same electrode material.

### Description of drawings

Non-limiting examples of the invention are described with reference to the accompanying drawings, wherein:
Figs. 1-8 refer to Example 1, in particular:
   Fig. 1 presents cyclic voltammograms at 2 mV·s⁻¹ of an AC/AC capacitor in 1 mol·L⁻¹ Li₂SO₄ + 0.5 mol·L⁻¹ KI up to 1.6 V,
   Fig. 2 presents cyclic voltammograms at 2 mV·s⁻¹ of AC/AC capacitors containing 1 mol·L⁻¹ Li₂SO₄ + 0.5 mol·L⁻¹ KI (full black) and 1 mol·L⁻¹ Li₂SO₄ (dashed black) up to (a) 0.8 V and (b) 1.6 V,
   Fig. 3 illustrates the galvanostatic charge/discharge of an AC/AC capacitor in 1 mol·L⁻¹ Li₂SO₄ + 0.5 mol·L⁻¹ KI up to 1.6 V at various current loads (a) and up to various voltages at 0.2 A·g⁻¹ (b),
   Fig. 4 illustrates the discharge (0.2 A·g⁻¹) capacitance and efficiency of AC/AC capacitors containing 1 mol·L⁻¹ Li₂SO₄ + 0.5 mol·L⁻¹ KI (full black) and 1 mol·L⁻¹ Li₂SO₄ (dashed black) up to 1.6 V,
   Fig. 5 shows the potential extrema of each electrode evaluated from galvanostatic charge/discharge at 0.2 A·g⁻¹ up to different voltage values (a) and cyclic voltammograms obtained at 2 mV·s⁻¹ within the determined potential limits (b) in a two-electrode AC/AC cell containing 1 mol·L⁻¹ Li₂SO₄ + 0.5 mol·L⁻¹ KI and equipped with a reference electrode,
   Fig. 6 presents (a) Nyquist plots realized from electrochemical impedance spectroscopy in the frequency range between 1 mHz and 100 kHz and (b) capacitance values per mass of one electrode versus frequency from impedance data for an AC/AC capacitor containing 1 mol·L⁻¹ Li₂SO₄ + 0.5 mol·L⁻¹ KI,
   Fig. 7 presents capacitance and resistance of AC/AC capacitors containing 1 mol·L⁻¹ Li₂SO₄ + 0.5 mol·L⁻¹ KI (▲) and 1 mol·L⁻¹ Li₂SO₄ (●) evaluated from galvanostatic (1 A.g⁻¹) discharge realized after successive two-hours floating periods at 1.6 V,
   Fig. 8. illustrates Ragone plots comparing the performance of AC/AC capacitors with 1 mol·L⁻¹ Li₂SO₄ + 0.5 mol·L⁻¹ KI (▲), 1 mol·L⁻¹ Li₂SO₄ (●) and 1 mol·L⁻¹ TEABF₄ in acetonitrile (■).
Figs. 9-15 refer to Example 2, in particular:

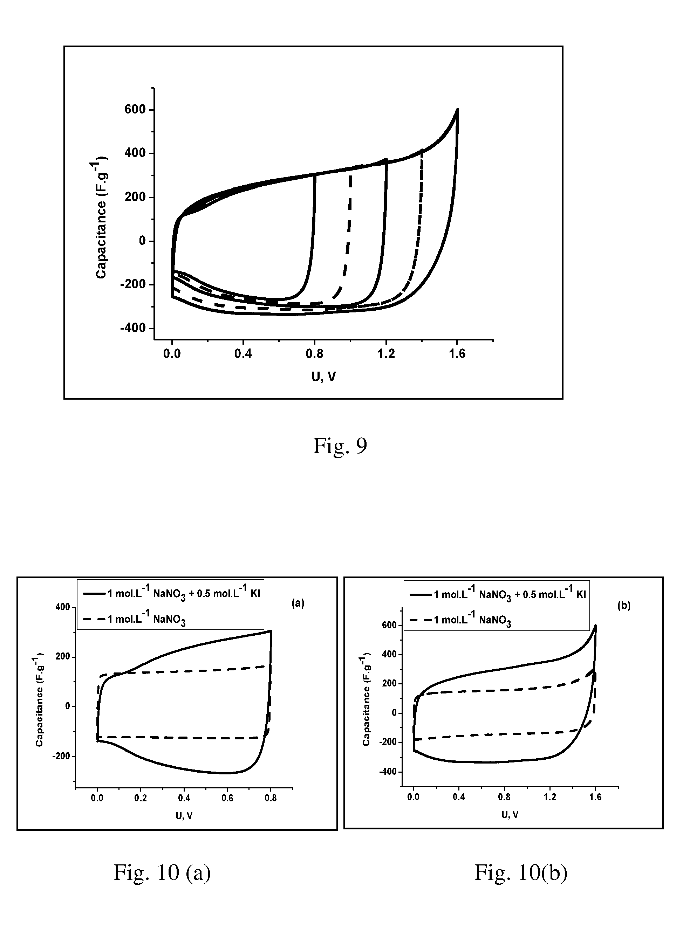

   Fig. 9 presents cyclic voltammograms at 2 mV·s⁻¹ of an AC/AC capacitor in 1 mol·L⁻¹ NaNO₃ + 0.5 mol·L⁻¹ KI up to 1.6 V,
   Fig. 10 presents cyclic voltammograms at 2 mV·s⁻¹ of AC/AC capacitors containing 1 mol·L⁻¹ NaNO₃ + 0.5 mol·L⁻¹ KI (full black) and 1 mol·L⁻¹ NaNO₃ (dashed black) up to a) 0.8 V and b) 1.6 V,

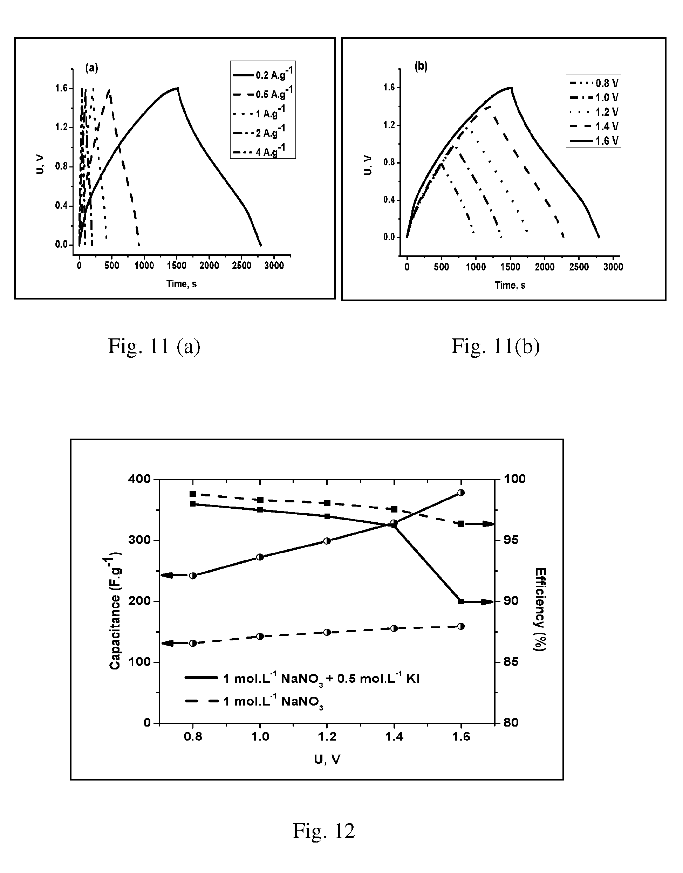

   Fig. 11 illustrates the galvanostatic charge/discharge of an AC/AC capacitor in 1 mol·L⁻¹ NaNO₃ + 0.5 mol·L⁻¹ KI up to 1.6 V at various current loads (a) and up to various voltages at 0.2 A.g⁻¹ (b),
   Fig. 12 illustrates the discharge (0.2 A·g⁻¹) capacitance and efficiency of AC/AC capacitors containing 1 mol·L⁻¹ NaNO₃ + 0.5 mol·L⁻¹ KI (full black) and 1 mol·L⁻¹ NaNO₃ (dashed black) up to 1.6 V,

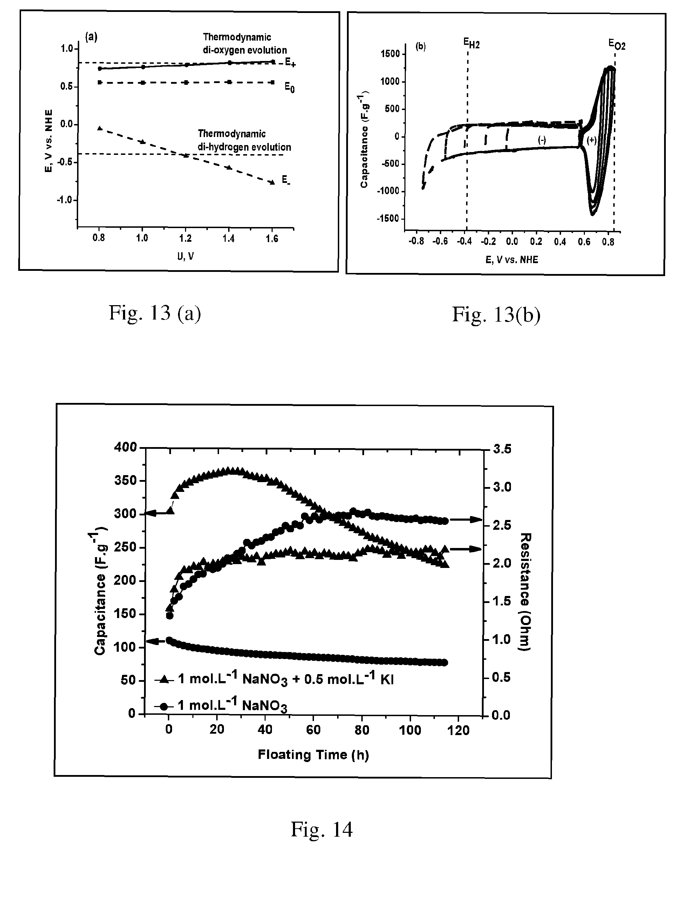

   Fig. 13 shows the potential extrema of each electrode evaluated from galvanostatic charge/discharge at 0.2 A·g⁻¹ up to different voltage values (a) and cyclic voltammograms obtained at 2 mV·s⁻¹ within the determined potential limits (b) in a two-electrode AC/AC cell containing 1 mol·L⁻¹ NaNO₃ + 0.5 mol·L⁻¹ KI and equipped with a reference electrode,
   Fig. 14 presents capacitance and resistance of AC/AC capacitors containing 1 mol·L⁻¹ NaNO₃ + 0.5 mol·L⁻¹ KI (▲) and 1 mol·L⁻¹ NaNO₃ (●) evaluated from galvanostatic (1 A·g⁻¹) discharge realized after successive two-hours floating periods at 1.6 V,

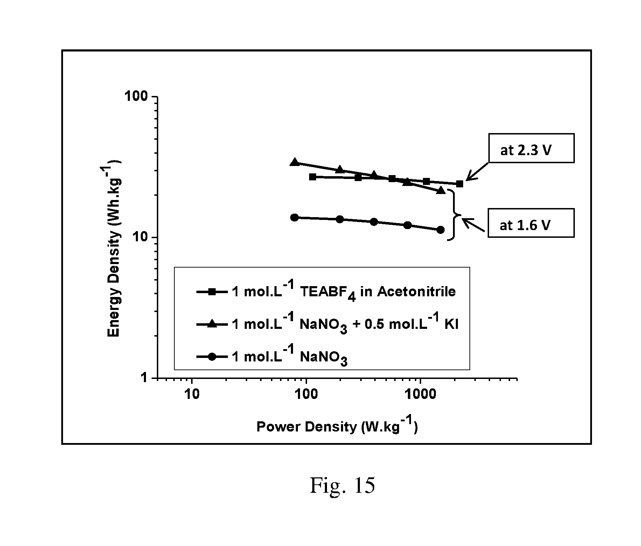

   Fig. 15 illustrates Ragone plots comparing the performance of AC/AC symmetric capacitors with 1 mol·L⁻¹ NaNO₃ + 0.5 mol·L⁻¹ KI (▲), 1 mol·L⁻¹ NaNO₃ (●) and 1 mol·L⁻¹ TEABF₄ in acetonitrile (■).

### Examples

Non-limiting examples of the present invention are described below

### Example 1

The electrochemical capacitor consisting of two electrodes made of activated carbon (AC) and an electrolytic mixture of 1 mol·L⁻¹ Li₂SO₄ and 0.5 mol·L⁻¹ potassium iodide (KI). The electrochemical capacitor electrodes were made of a composite consisting of 80 wt.% KOH activated carbon with BET specific surface area 2180 m²·g⁻¹, 10 wt.% polytetrafluoroethylene (PTFE) and 10 wt.% carbon black having good electrical conductivity. The electrodes in the form of pellets with a diameter of 10 mm and a weight of around 8-10 mg and a thickness of around 0.2-0.3 mm were pressed at 5 ton·cm⁻² in a hydraulic press for 2 minutes. The pellets, after drying under vacuum at 110°C for 3 hours, were cooled down to room temperature and weighed.

Thus prepared two identical electrodes were separated with a porous glass fiber separator, and placed in a teflon vessel between two current collectors of stainless steel type 316L. The vessel was filled with a mixture containing 1 mol·L⁻¹ Li₂SO₄ + 0.5 mol·L⁻¹ potassium iodide (KI), and sealed.

The electrical conductivity of the 1 mol·L⁻¹ Li₂SO₄ + 0.5 mol·L⁻¹ KI electrolyte mixture was 94 mS·cm⁻¹ and pH = 6.3. The values of capacitance, efficiency and operating life were measured by cyclic voltammetry, galvanostatic charge/discharge and floating at constant voltage, and compared with those obtained in 1 mol·L⁻¹ Li₂SO₄ electrolyte. For the mixed salt aqueous electrolyte (1 mol·L⁻¹ Li₂SO₄ + 0.5 mol·L⁻¹ KI), a capacitance value of 366 F·g⁻¹ was measured using galvanostatic (0.2 A·g⁻¹) charge/discharge up to 1.6 V. By contrast, a capacitance value of 215 F·g⁻¹ was obtained in 1 mol· L⁻¹ Li₂SO₄ using galvanostatic (0.2 A.g⁻¹) charge/discharge up to 1.6 V. Further, capacitance and resistance were measured after successive two-hour periods of floating. Floating means keeping the cells for a certain time at a certain voltage, in this case, two hours at a voltage of 1.6 V at room temperature. A total of 60 floating periods (each for two hours) was used and each was interspersed by five galvanostatic charge/discharge cycles made to estimate the capacitance and resistance of the system from the 5^{th} discharge. In 1 mol·L-¹ Li₂SO₄, used as a reference electrolyte during floating, the resistance increased from 1.52 Ω to 2.78 Ω, while the capacitance decreased from 188 F·g⁻¹ to 129 F·g⁻¹. The increase in resistance could be due to corrosion products formed on the positive current collector, which perturb the electrical contact between the activated carbon electrode and the current collector made from stainless steel. By contrast, in the mixture of 1 mol·L⁻¹ Li₂SO₄ + 0.5 mol·L⁻¹ KI, the resistance is lower than in the solution without KI, and remains constant at around 1.2 Ω for 120 hours of floating. During 120 hours of floating at 1.6 V in the mixture of 1 mol·L⁻¹ Li₂SO₄ + 0.5 mol·L⁻¹ KI, capacitance values between 310-320 F·g⁻¹ were obtained with no decay in capacitance over the entire period of floating.

### Measurements conditions of Example 1:

Supercapacitors body:
   - Two-electrode cell, optionally with reference (teflon vessel)
   - Current collectors: Stainless steel (316L)
   - Separator: glass micro fiber, thickness: 260µm, pore size: 1.6µm
   - Reference electrode: Ag wire
Electrolytes: aqueous solutions
   1 mol·L⁻¹ Li₂SO₄ + 0.5 mol·L⁻¹ KI mixed electrolyte or
   1 mol·L⁻¹ Li₂SO₄

### Characterization techniques:

The cyclic voltammetry measurements (CV) were performed in the voltage range from 0 to 1.6 V with a sweep rate of 2 mV·s⁻¹ for both two-electrode and two-electrode with reference electrode measurements.

The galvanostatic measurements were performed with specific current values between 0.2 A·g⁻¹ and 4.0 A·g⁻¹.

Impedance measurements were conducted over a frequency range of 1 mHz to 100 kHz. All measurements were realized at 25°C.

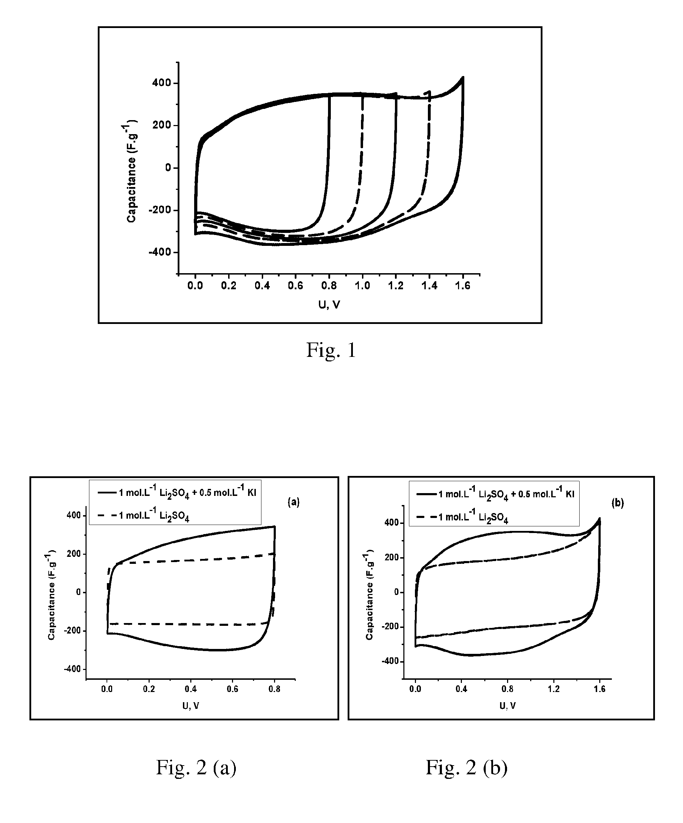

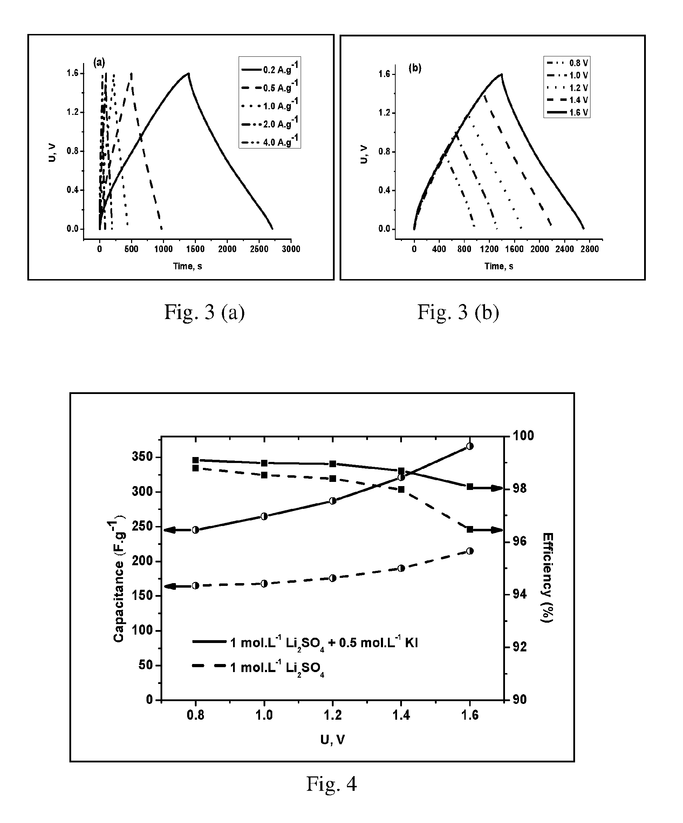

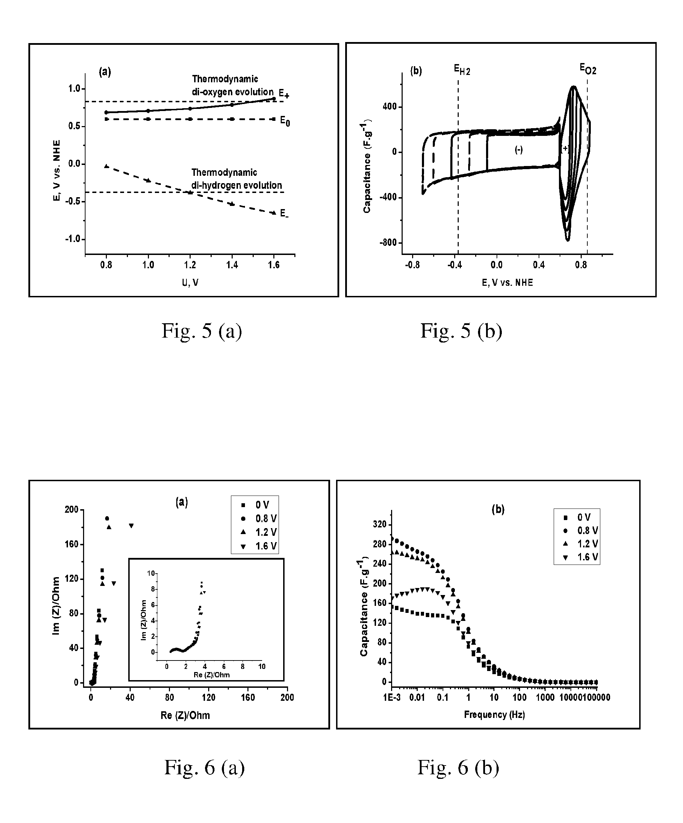

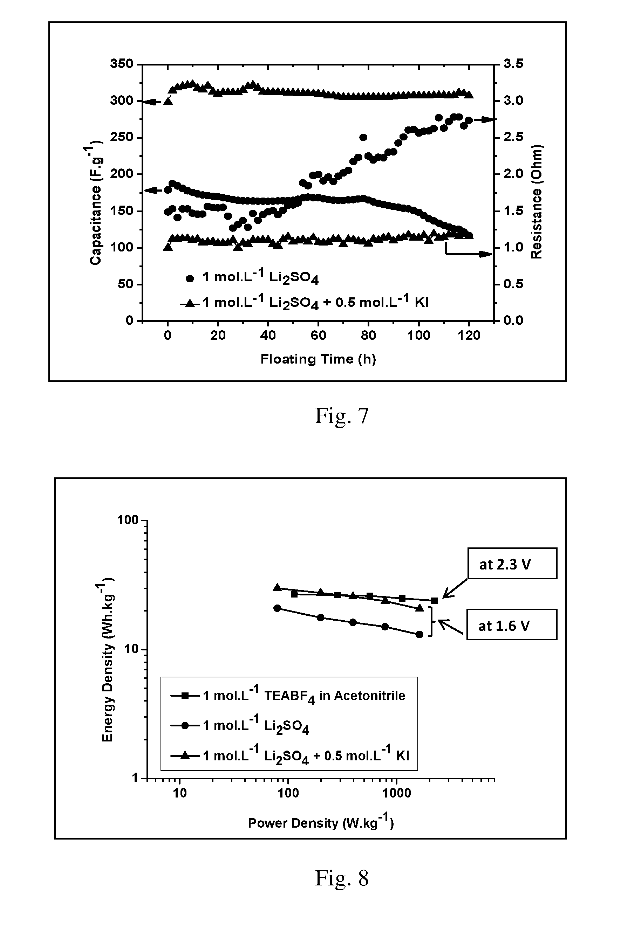

Figs. 1-8 of drawings present the measurements obtained in the electrochemical capacitor described in Example 1.

### Example 2

The electrochemical capacitor consisting of two electrodes made of activated carbon (AC), with an electrolytic mixture of 1 mol·L⁻¹ NaNO₃ and 0.5 mol·L⁻¹ potassium iodide (KI). The electrochemical capacitor electrodes were made of a composite consisting of 80 wt.% KOH activated carbon with BET specific surface area 2180 m²·g⁻¹, 10 wt.% polytetrafluoroethylene (PTFE) and 10 wt.% carbon black having good electrical conductivity. The electrodes in the form of pellets with a diameter of 10 mm and a weight of around 8-10 mg and a thickness of around 0.2-0.3 mm were pressed at 5 ton·cm⁻² in a hydraulic press for 2 minutes. The pellets after drying under vacuum at 110°C for 3 hours were cooled down to room temperature and weighed.

Thus prepared two identical electrodes were separated with a porous glass fiber separator, and placed in a teflon vessel between two current collectors of stainless steel type 316L. The vessel was filled with a mixture containing 1 mol·L⁻¹ NaNO₃ + 0.5 mol·L⁻¹ KI, and sealed.

The electrical conductivity of the 1 mol·L⁻¹ NaNO₃ + 0.5 mol·L⁻¹ KI mixture was 105 mS·cm⁻¹ and pH = 6.5. The values of capacitance, efficiency and operating life were measured by cyclic voltammetry, galvanostatic charge/discharge and floating, and compared with those obtained in 1 mol·L⁻¹ NaNO₃. For the mixed salt aqueous electrolyte (1 mol·L⁻¹ NaNO₃ + 0.5 mol·L⁻¹ KI), a capacitance value of 378 F·g⁻¹ was measured using galvanostatic (0.2 A.g⁻¹) charge/discharge up to 1.6 V. By contrast, in 1 mol· L⁻¹ NaNO₃, a capacitance value of only 159 F·g⁻¹ was obtained using galvanostatic (0.2 A.g⁻¹) charge/discharge up to 1.6 V. Further, capacitance and resistance were measured after successive two-hour periods of floating, as defined in Example 1. A total of 60 (each for two hours) floating periods was used and each was interspersed by five galvanostatic charge/discharge cycles made to estimate the capacitance and resistance of the system from the 5^{th} discharge. In 1 mol·L⁻¹ NaNO₃, used as a reference electrolyte during floating, the resistance increased from 1.29 Ω to 2.57 Ω, while the capacitance decreased from 111 F·g⁻¹ to 80 F·g⁻¹. The increase in resistance could be due to corrosion products formed on the positive current collector, which perturb the electrical contact between the activated carbon electrode and the current collector made from stainless steel. By contrast, in the mixture of 1 mol·L⁻¹ NaNO₃ + 0.5 mol·L⁻¹ KI, an initial increase in resistance from 1.38 Ω to 2.05 Ω was observed during the first 15 hours of floating; then the resistance remains almost constant at around 2.1 Ω until the end of floating. Upon floating at 1.6 V in the 1 mol·L⁻¹ NaNO₃ + 0.5 mol·L⁻¹ KI mixture, the capacitance values increase from 304 F·g⁻¹ to 364 F·g⁻¹ during the first 30 hours, and then they decrease to reach 227 F·g⁻¹ after 120 hours of floating.

### Measurements conditions of Example 2

Supercapacitors body:
- Two-electrode cell, optionally with reference (teflon vessel)
- Current collectors: Stainless steel (316L)
- Separator: glass micro fiber, thickness: 260µm, pore size: 1.6µm
- Reference electrode: Ag wire

Electrolytes: Aqueous solutions
1 mol·L⁻¹ NaNO₃ + 0.5 mol·L⁻¹ KI mixed electrolyte or
1 mol·L⁻¹ NaNO₃

### Characterization techniques:

The cyclic voltammetry measurements (CV) were performed in the voltage range from 0 to 1.6 V with a sweep rate of 2 mV·s⁻¹ for both two-electrode and two-electrode with reference electrode measurements.

The galvanostatic measurements were performed with specific current values between 0.2 A·g⁻¹ and 4.0 A·g⁻¹.

All measurements were realized at 25°C.

Figs. 9-15 of drawings present the measurements obtained in the electrochemical capacitor described in the Example 2.

The presented figures of drawings provide a report that contains capacitance, efficiency, resistance, electrodes potential range, charge propagation, energy and power density of capacitors realized by using 1 mol·L⁻¹ Li₂SO₄ + 0.5 mol·L⁻¹ KI and 1 mol·L⁻¹ NaNO₃ + 0.5 mol·L⁻¹ KI mixed electrolytes and electrodes made of KOH activated carbon with pores of size ranging from 0.6 to 2.5 nm and with an average micropore size L₀ = 1.55 nm. As presented on Fig. 1, 2, 4 and Fig. 9, 10, 12, they exhibit remarkable capacitance values of 366 F·g⁻¹ and 378 F·g⁻¹ up to 1.6 V, respectively.

Aging tests under floating conditions show that the mixed electrolytes display excellent performance for a long period of time without losing efficiency. The capacitors realized by using mixed salt electrolytes and stainless steel current collectors exhibit energy density values of 30 Wh·kg⁻¹ and 34 Wh·kg⁻¹ for 1 mol·L⁻¹ Li₂SO₄ + 0.5 mol·L⁻¹ KI and 1 mol·L⁻¹ NaNO₃ + 0.5 mol·L⁻¹ KI, respectively, making them economically viable energy storage devices.

### References

1. F. Béguin, E. Frackowiak, Supercapacitors: Materials, Systems and Applications, Ch. 2, Wiley-VCH, Weinheim, 2013, pp. 71-73.
2. B.E. Conway, Electrochemical Supercapacitors: Scientific Fundamentals and Technological Applications, Kluwer Academic, New York, 1999, p. 549.
3. R. Kötz, M. Carlen, Principles and applications of electrochemical capacitors, Electrochim. Acta, 45 (2000) 2483-2498.
4. EP2323146 "Water-based electrolyte for electric double layer capacitor and electric double layer capacitor having the same" Taiwan Textile Research Institute
5. WO2012126499 "Electrochemical Capacitor" François Béguin (FR); Laurent Demarconnay (FR); Encarnacion Raymundo-Pinero (FR).
6. M. Bichat, E. Raymundo- Piñero, F. Béguin, High voltage supercapacitor built with seaweed carbons in neutral aqueous electrolyte, Carbon 48 (2010) 4351-4361.
7. L. Demarconnay, E. Raymundo-Piñero, F. Béguin, A symmetric carbon/carbon supercapacitor operating at 1.6 V by using a neutral aqueous solution, Electrochem. Comm., 12 (2010) 1275-1278.
8. Q. Gao, L. Demarconnay, E. Raymundo-Piñero, F. Béguin, Exploring the large voltage range of carbon/carbon supercapacitors in aqueous lithium sulfate electrolyte, Energy & Environ. Sci., 5 (2012) 9611-9617.
9. K. Fic, G. Lota, M. Meller, E. Frackowiak, Novel insight into neutral medium as electrolyte for high-voltage supercapacitors, Energy & Environ. Sci., 5 (2012) 5842-5850.
10. Wysokonapieciowy kondensator elektrochemiczny (2010) PL P-392742 (E. Frackowiak, K. Fic, G. Lota)
11. E. Frackowiak, Q. Abbas, F. Béguin, Carbon/carbon supercapacitors, J. Energy Chem., 22 (2013) 226-240.
12. G. Lota, E. Frackowiak, Electrochem. Commun. 11 (2009) 87.
13. G. Lota, K. Fic, E. Frackowiak, Electrochem. Commun. 12 (2011) 38-41.
14. Kondensator elektrochemiczny pracujacy w roztworze jodku (2008) P 386352 (E. Frackowiak, G. Lota, J. R. Miller)
15. E. Frackowiak, G. Lota, K. Fic, M. Meller, ChemSusChem 5 (2012) 1181-1185.
16. S. Senthilkumar, R. Selvan, Y. Lee, J. Melo, J. Mater. Chem. A 1 (2013) 1086-1095.

## Claims

1. An electrochemical capacitor polarized up to 1.6 V comprising two electrodes made of high surface area carbon placed in mixed salt aqueous electrolyte, **characterized in that** one of the components of the mixed aqueous electrolyte is an iodide (I⁻) containing salt in the concentration between 0.1 mol·L⁻¹ and 2 mol·L⁻¹ and another component is a sulphate (SO₄²⁻) anion salt with a cation selected from Li⁺, Na⁺, K⁺, Rb⁺, Cs⁺, NH₄⁺, Be²⁺, Mg²⁺, Ba²⁺, and Al³⁺ or a nitrate (NO₃⁻) anion salt with a cation selected from Li⁺, Na⁺, K⁺, Rb⁺, Cs⁺, NH₄⁺, Be²⁺, Mg²⁺, Ca²⁺, Sr²⁺, Ba²⁺, and Al³⁺, in the concentration from 0.1 mol·L⁻¹ to 10 mol·L⁻¹ or up to 0.2 mol·L⁻¹ below the solubility limit.

2. The electrochemical capacitor of claim 1 **characterized in that** the high surface area carbon material of electrodes is selected from activated carbon (AC), nanotubes, graphene, nanocones, carbon onions, carbon aerogels, or composites made from these materials, carbon cloth, carbon monolith, preferably activated carbon (AC).

3. The electrochemical capacitor of claim 1 or 2 **characterized in that** each electrode comprises
a current collector, preferably from stainless steel or titanium or nickel and its alloys.

4. The electrochemical capacitor of any of claims 1-3 with the aqueous electrolyte comprising potassium iodide (KI) and lithium sulfate (Li₂SO₄), preferably in concentration of 0.5 mol·L⁻¹ KI and 1 mol·L⁻¹ Li₂SO₄.

5. The electrochemical capacitor of any of claims 1-3 with the aqueous electrolyte comprising potassium iodide (KI) and sodium nitrate (NaNO₃), preferably in concentration of 0.5 mol·L⁻¹ KI and 1 mol·L⁻¹ NaNO₃.

## Patentansprüche

1. Elektrochemischer Kondensator, der bis zu 1,6 V polarisiert ist, der zwei Elektroden umfasst, die aus einem Kohlenstoff mit großer Oberfläche bestehen, die in gemischtem wässrigen Salzelektrolyt platziert sind, **dadurch gekennzeichnet, dass** eine der Komponenten des gemischten wässrigen Salzelektrolyt ein Jodid (I⁻) ist, das Salz in einer Konzentration zwischen 0,1 mol·L⁻¹ und 2 mol·L⁻¹ enthält, und eine andere Komponente ein Sulfat (SO₄²⁻) -Anionensalz mit einem Kation ist, das aus Li⁺, Na⁺, K⁺, Rb⁺, Cs⁺, NH₄⁺, Be²⁺, Mg²⁺, Ba²⁺ und Al³⁺ ausgewählt ist, oder ein Nitrat (NO₃⁻) -Anionensalz mit einem Kation ist, das aus Li⁺, Na⁺, K⁺, Rb⁺ Cs⁺, NH₄⁺, Be²⁺ M²⁺, Ca²⁺ Sr²⁺, Ba²⁺ und Al³⁺ ausgewählt ist, mit einer Konzentration von 0,1 mol.L⁻¹ bis 10 mol·L⁻¹ oder bis zu 0,2 mol·L⁻¹ unter dem Löslichkeitslimit.

2. Elektrochemischer Kondensator nach Anspruch 1, **dadurch gekennzeichnet, dass** das Kohlenstoffmaterial mit großer Oberfläche der Elektroden aus einer Aktivkohle (AC), Nanoröhrchen, Graphen, Nanoconen, einer Kohlenstoffzwiebelstruktur, Kohlenstoffaerogelen oder Verbundwerkstoffen aus diesen Materialien, Aktivkohletuch, Kohlenstoff-Monolith, vorzugsweise Aktivkohle (AC) ausgewählt ist.

3. Elektrochemischer Kondensator nach Anspruch 1 oder 2, **dadurch gekennzeichnet, dass** jede Elektrode einen Stromabnehmer, vorzugsweise aus rostfreiem Stahl oder Titan oder Nickel und seinen Legierungen umfasst.

4. Elektrochemischer Kondensator nach einem der Ansprüche 1 bis 3, wobei der wässrige Elektrolyt Kaliumjodid (KI) und Lithiumsulfat (Li₂SO₄) vorzugsweise in einer Konzentration von 0,5 mol·L⁻¹ KI und 1 mol·L⁻¹ Li₂SO₄ umfasst.

5. Elektrochemischer Kondensator nach einem der Ansprüche 1 bis 3, wobei der wässrige Elektrolyt Kaliumjodid (KI) und Natriumnitrat (NaNO₃) vorzugsweise in einer Konzentration von 0,5 mol·L⁻¹ KI und 1 mol·L⁻¹ NaNO₃ umfasst.

## Revendications

1. Condensateur électrochimique polarisé jusqu'à 1,6 V comprenant deux électrodes faites de carbone de surface spécifique élevée placé dans un électrolyte aqueux de sel mixte, **caractérisé par le fait que** l'un des composants de l'électrolyte aqueux mixte est un sel à teneur en iodure (I⁻) dans la concentration entre 0,1 mol·L⁻¹ et 2 mol·L⁻¹ et un autre composant est un sel à anion sulfate (SO₄²⁻) avec un cation choisi parmi Li⁺, Na⁺, K⁺, Rb⁺, Cs⁺, NH₄⁺, Be²⁺, Mg²⁺, Ba²⁺ et Al³⁺ ou un sel à anion nitrate (NO₃⁻) avec un cation choisi parmi Li⁺, Na⁺, K⁺, Rb⁺, Cs⁺, NH₄⁺, Be²⁺, Mg²⁺, Ca²⁺, Sr²⁺, Ba²⁺ et Al³⁺, dans la concentration de 0,1 mol·L⁻¹ à 10 mol·L⁻¹ ou jusqu' à 0,2 mol·L⁻¹ au-dessous de la limite de solubilité.

2. Condensateur électrochimique selon la revendication 1, **caractérisé par le fait que** la matière de carbone de surface spécifique élevée des électrodes est choisie parmi le charbon actif (AC), les nanotubes, le graphène, les nano-cônes, les oignons de carbone, les aérogels de carbone ou les composites faits de ces matières, un tissu de carbone, un monolithe de carbone, de préférence le charbon actif (AC).

3. Condensateur électrochimique selon l'une des revendications 1 ou 2, **caractérisé par le fait que** chaque électrode comprend un collecteur de courant, de préférence d'acier inoxydable ou de titane ou de nickel et de leurs alliages.

4. Condensateur électrochimique selon l'une quelconque des revendications 1 à 3, avec l'électrolyte aqueux comprenant de l'iodure de potassium (KI) et du sulfate de lithium (Li₂SO₄), de préférence dans la concentration de 0,5 mol·L⁻¹ de KI et 1 mol·L⁻¹ de Li₂SO₄.

5. Condensateur électrochimique selon l'une quelconque des revendications 1 à 3, avec l'électrolyte aqueux comprenant de l'iodure de potassium (KI) et du nitrate de sodium (NaNO₃), de préférence dans la concentration de 0,5 mol·L⁻¹ de KI et 1 mol·L⁻¹ de NaNO₃.
